(19) 

Europäisches
Patentamt

European
Patent Office

Office européen
des brevets

(11)   **EP 4 463 814 B1**

(12)   **EUROPEAN PATENT SPECIFICATION**

(45) Date of publication and mention
of the grant of the patent:
**27.08.2025   Bulletin 2025/35**

(51) International Patent Classification (IPC):
**G06Q 40/04** *(2012.01)*       **G06Q 50/06** *(2024.01)*

(21) Application number: **22797403.7**

(22) Date of filing: **19.10.2022**

(52) Cooperative Patent Classification (CPC):
**G06Q 50/06; G06Q 40/04**

(86) International application number:
**PCT/FI2022/050693**

(87) International publication number:
**WO 2024/084125 (25.04.2024 Gazette 2024/17)**

(54) **TRAINED OPTIMIZATION AGENT FOR RENEWABLE ENERGY TIME SHIFTING**

TRAINIERTER OPTIMIERUNGSAGENT ZUR ZEITVERSCHIEBUNG ERNEUERBARER ENERGIEN

AGENT D'OPTIMISATION ENTRAÎNÉ POUR DÉCALAGE TEMPOREL D'ÉNERGIE RENOUVELABLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**20.11.2024   Bulletin 2024/47**

(73) Proprietor: **AUTOMOUS OY**
**02150 Espoo (FI)**

(72) Inventors:
• **SIERLA, Seppo Antero**
**00076 Aalto (FI)**

• **HÖLTTÄ, Riku Taneli**
**00076 Aalto (FI)**

(74) Representative: **Papula Oy**
**P.O. Box 981**
**00101 Helsinki (FI)**

(56) References cited:
**CN-A- 110 276 698        CN-A- 110 571 795
US-A1- 2014 316 973    US-A1- 2019 036 340
US-A1- 2022 230 243**

**Description**

**TECHNICAL FIELD**

The present disclosure generally relates to the field of renewable electrical energy production. In particular, the present disclosure relates to a device, a method, a system and a computer program to operate productivity for producing controlled renewable electrical energy.

**BACKGROUND**

The background art considers a site with renewable generation and an energy storage such as a battery or a pumped waterpower plant or the like having a capability to store large amounts of energy and convert it to electricity, producing electricity to an electrical power market with demands that may vary from one market interval to the next. A battery may be used to shift the electricity supply to market intervals with higher demands. A maximum power limit constraint at the site's grid coupling, which must be considered as a constraint for managing power flows, places a considerable risk for the producer.

Since renewable energy sales are made using possibly erroneous generation forecasts, the battery can also be used to cope with differences between actual and forecasted generation. If the battery becomes full or empty during this process, it may be impossible to deliver the committed energy to the grid without violating the power limit constraint, so the system may incur a penalty from the market. Further, the battery may be used to shift sales of electricity from low demand market intervals to high demand market intervals, which is done by bidding a smaller than forecasted sales volume at low demand intervals and a larger than forecasted sales volume at high demand intervals. US 2022/230243 A1 describes a method and apparatus for renewable energy allocation using reinforcement learning.

**SUMMARY**

The scope of protection sought for various example embodiments of the disclosure is set out by the independent claims. The example embodiments and features, if any, described in this specification that do not fall under the scope of the independent claims are to be interpreted as examples useful for understanding various example embodiments of the disclosure.

An example embodiment of a device for an electricity power bid comprises: at least one processor; and at least one memory including programmable logic, where the at least one memory and the programmable logic are configured, with the at least one processor, to cause the device to operate a bidding optimizer. The bidding optimizer is configured to control an electricity energy storage to compensate for electricity power generation forecasts used at an electricity power bidding time. Furthermore, it is configured to control renewable electricity power generation so that that a maximum power flow limit at a grid coupling is not exceeded. Furthermore, it is configured to apply the electricity energy storage to shift providing of the generated renewable electricity power to intervals with a higher demand. Furthermore, it is configured to optimize a reward function to avoid an unnecessary penalty and energy storage aging. Even furthermore, it is configured to reinforce a learning cycle of a reinforcement learning agent algorithm that is used to optimize the operation of the bidding optimizer as per the configurations. For example, the device may optimize the bids to the electrical power market, using market demand and renewable generation forecasts, so that the utilization scale from the power market and wear of the energy storage is optimized.

In an example embodiment, alternatively or in addition to the above-described example embodiments, the device is configured to execute a revenue optimization function as follows:

$$
\begin{aligned}
r = revenue\big(e_{exchange}, rate_{accept}\big) + \\
c_1 * penalty\big(e_{exchange}, e_{delivered}\big) + \\
c_2 * age\big(SoC[N], P_{grid\_bat}[N], P_{gen\_bat}[N]\big).
\end{aligned}
$$

In the function r is a reward for an operation interval *T*. The *revenue()* -function is a multiplication of an amount of electricity to be delivered $e_{exchange}$ with an accepted rate *rate*$_{accept}$ by an exchange. The *penalty()* -function is the penalty associated with rules of the electrical power exchange. The age() -function is the aging of the energy storage, which is an approximation of equivalent full cycles of storage aging during the operation interval, multiplied by the penalty of one cycle for the energy storage. For example, the device may optimize the bids to an electricity exchange, using market demand and renewable generation forecasts, so that the utilization of the electricity exchange and wear of the energy storage is optimized.

In an example embodiment, alternatively or in addition to the above-described example embodiments, the device is configured to use a battery storage as the electricity energy storage to manage errors in the electricity power generation forecasts used at the electricity power bidding time. For example, the battery may be a Lithium-Ion (Li) -type battery that provides a longer lifespan, higher efficiency and higher depth of discharge than conventional Lead-Acid -type batteries.

In an example embodiment, alternatively or in addition to the above-described example embodiments, the device is configured to ensure that the maximum power flow limits at the grid coupling are never exceeded, despite fluctuations in the renewable electricity power generation. For example, violations of the grid code or failure to deliver the accepted amount of energy may cause a huge penalty on the operator of the renewable energy production site, and thus should be avoided.

In an example embodiment, alternatively or in addition to the above-described example embodiments, the device is configured to shift the providing of the generated renewable electricity power based on only uncertain demand forecasts available at the time of placing the bid. For example, the device may be able to configure the power distribution based solely on simulation data.

In an example embodiment, alternatively or in addition to the above-described example embodiments, the bidding optimizer is further configured to control both the electricity energy storage and renewable energy generator to meet an accepted demand of electricity from the electricity exchange and to avoid a penalty of exceeded delivery of electricity. For example, the device may be able to utilize various electricity energy sources concurrently and make efforts to avoid the penalty for undesired delivery of electricity to the grid.

In an example embodiment, alternatively or in addition to the above-described example embodiments, the device comprises an interface, wherein the interface may comprise a data input for receiving data related to a weather forecast, electricity exchange forecast, electricity exchange rate, electricity exchange demand and state of charge (SoC), and an output configured to provide an action for the electricity exchange, wherein the action comprises the exchange data for an upcoming operation interval T of the system. Additionally, the interface may comprise outputs to control a renewable energy controller and an energy storage manager and store required variables used by the reinforcement learning agent in the memory of said device. For example, the reinforcement learning agent may use the data received by the input to continue the learning cycle while in operation or control the shifting of the energy with the control messages to avoid either the penalty of the grid violation or optimize the bid for the exchange.

In an example embodiment, alternatively or in addition to the above-described example embodiments, the device is configured for a renewable energy site comprising at least one generator and at least one energy storage, where the at least one generator comprises at least one associated renewable energy controller and the at least one energy storage comprises at least one energy storage manager, where the renewable energy controller and the energy storage manager are configured to receive control messages from the device. For example, the device may use the control messages to direct excess power generated by the generator to charge the energy storage or to direct more power from the storage to the grid should the generator not provide the required energy for the grid due to fluctuations in the generation.

In an example embodiment, alternatively or in addition to the above-described example embodiments, the device is capable of operating in either a virtual or physical environment. For example, the device and its reinforcement learning agent algorithm may be trained in a completely virtual setting to provide the algorithm means to predictively operate in an actual physical renewable energy site.

In an example embodiment, alternatively or in addition to the above-described example embodiments, the device may either be a separate physical device, where the physical device can be: A Field-programmable Gate Array (FPGA), Application Specific Integrated Circuit (ASIC), Application Specific Standard Product (ASSP), System-on-a-chip system (SoC), Complex Programmable Logic Device (CPLD) or a Graphics Processing Unit (GPU) or wherein the device may be a virtual device, programmed within any general computer architecture. For example, a renewable energy site may use the device and its input-output data with a cloud service to operate the pre-existing generator and energy storage of the site.

An example embodiment of a method for an electricity power bid comprises means to control at least one electricity energy storage to compensate for electricity power generation forecasts used at an electricity power bidding time to predict the behaviour of the energy storage and optimize its aging penalty. Furthermore, the method comprises means to control at least one renewable energy power generator so that maximum power flow limits at energy grid coupling are not exceeded, avoiding penalties of grid code violations and failed delivery forced upon the operator of the method. Additionally, the method comprises optimization of a reward function and reinforcement of the learning cycle of a reinforcement learning agent algorithm that is used to optimize the operation of the method as per the described configuration of this method and previous embodiments.

An example embodiment of a computer program product comprises program code configured to perform the method according to any of the above example embodiments, when the computer program product is executed on a computer.

## DESCRIPTION OF THE DRAWINGS

The accompanying drawings, which are included to provide a further understanding of the example embodiments and constitute a part of this specification, illustrate example embodiments and together with the description help to explain the principles of the example embodiments. In the drawings:

Fig. 1 is a block diagram of an embodiment disclosed herein, illustrating a device (100) configured to function as an intermediate agent between a renewable energy production site and an electricity exchange. The device may be configured as a bidding optimizer.

Fig. 2 is an illustration of an example embodiment of the subject matter described herein illustrating a bidding optimizer (200) configured to operate as an intermediate between a renewable energy production site -system (299) and an electricity exchange (208).

Fig. 3 is a block diagram of an example embodiment of the subject matter described herein illustrating a bidding optimizer (200) configured to operate as an intermediate between a renewable energy production site -system (299) and an electricity exchange (208), to send and receive certain data, such as forecasts and exchange data, to optimize the behaviour of said renewable energy production site during an operation cycle.

Fig. 4 is a flowchart for the logic and training method of an example embodiment. The flowchart comprises different conditions that affect the behaviour of the generator through the controller and the energy storage through the energy storage manager.

## DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present disclosure may be constructed or utilized. The description sets forth the functions of the example and the sequence of steps for constructing and operating the example. However, the same or equivalent functions and sequences may be accomplished by different example embodiments.

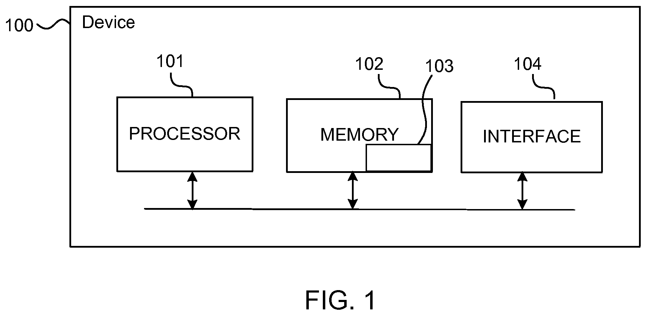

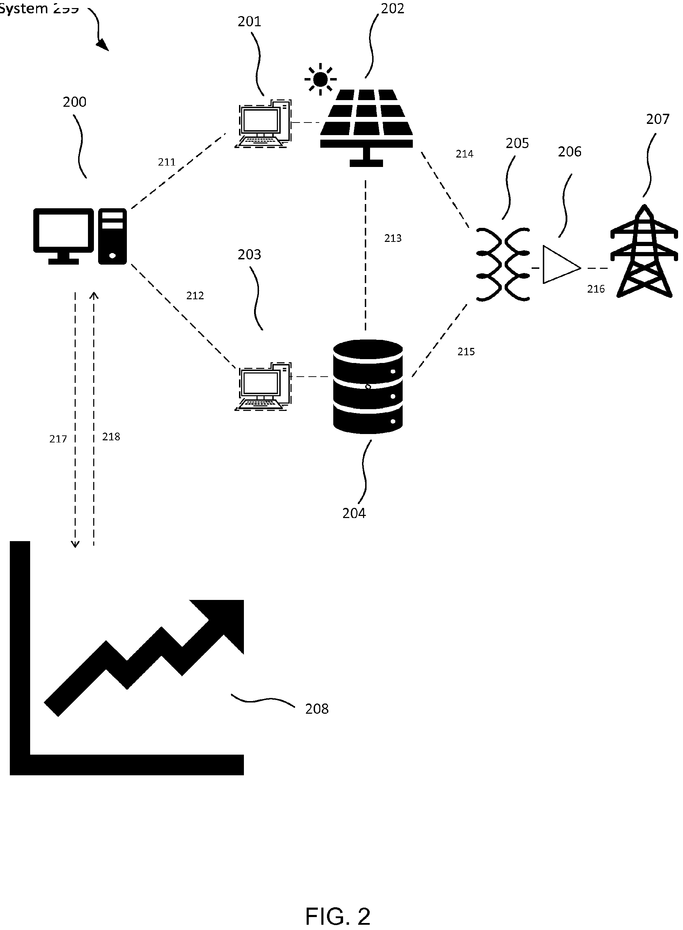

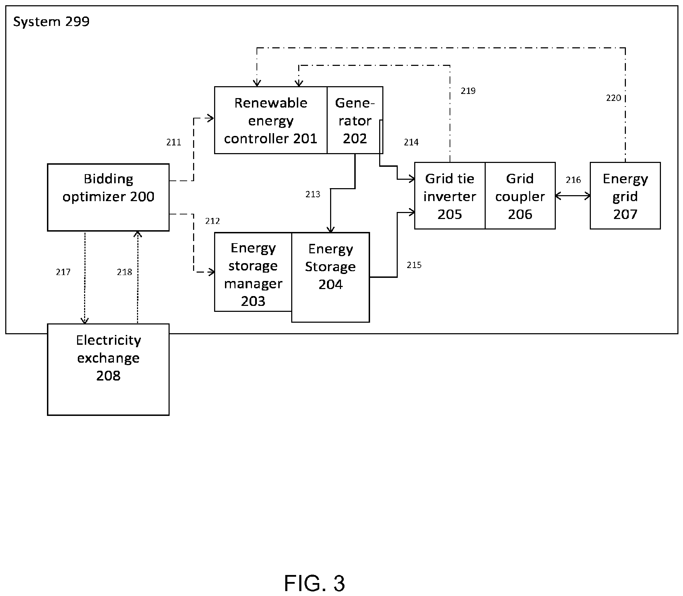

Fig. 1 is a block diagram of a device 100 configured as an embodiment disclosed herein, where the embodiment may be related to a bidding optimizer 200. The bidding optimizer 200 functions as an intermediate agent between a renewable energy production site -system 299 and an electricity exchange 208 (shown for example in Fig. 2 and 3). The bidding optimizer may comprise one or more processors 101 and one or more memories 102 that comprise computer program code 103. The device 100 may also comprise at least one communication interface 104, as well as other elements, such as an input/output module (not shown in Fig. 1). The functionality of the bidding optimizer 200 is achieved with a reinforcement learning agent (RLA) algorithm, by configuring the bidding optimizer 200 to reinforce the learning cycle of the RLA by using external data 218 from the electricity exchange 208, such as market rate and demand (not shown in Fig. 1; shown in Fig. 2 and 3), and internal data using local variables stored in the one or more memories 103. Finally, the RLA algorithm is configured to produce an optimized bid for the electricity exchange 208, depending on external data and operation during the operation interval.

Some terminology used herein may follow the naming scheme of reinforcement learning in its current form. However, this terminology should not be considered limiting, and the terminology may change over time. Thus, the following discussion regarding any example embodiment may also apply to other technologies. Reinforcement learning, RL, may relate to a subfield of machine learning that combines the RL and deep learning etc. The RL considers the problem of a computational agent learning to make decisions by trial and error. RL incorporates deep learning into the solution, allowing agents to make decisions from unstructured input data without manual engineering of the state space. RL algorithms are able to take in very large inputs, for example every pixel rendered to the screen in a video game, and decide what actions to perform to optimize an objective, for example maximizing the game score. RL has been used for a diverse set of applications including but not limited to simulations, design, etc.

Furthermore, the processor 101 may be capable of executing the stored instructions. In an example embodiment, the processor 101 may be embodied as a multi-core processor, a single core processor, or a combination of one or more multi-core processors and one or more single core processors. For example, the processor 101 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an example embodiment, the processor 101 may be configured to execute a hard-coded functionality. In an example embodiment, the processor 101 is embodied as an executor of software instructions, wherein the instructions may specifically configure the processor 101 to perform the algorithms and/or operations described herein when the instructions are executed.

The memory 102 may be embodied as one or more volatile memory devices, one or more non-volatile memory devices, and/or a combination of one or more volatile memory devices and non-volatile memory devices. For example, the memory 102 may be embodied as semiconductor memories (such as mask ROM, PROM (programmable ROM), EPROM (erasable PROM), flash ROM, RAM (random access memory), etc.).

The device 100 may be embodied in, for example, a computer. Alternatively, or in addition, the computer may be a cloud computer system having various distributed units. Although the device 100 may be depicted to comprise only one processor 101, the network node device 100 may comprise more processors. In an example embodiment, the memory 102 is capable of storing instructions, such as an operating system and/or various applications.

When the device 100 is configured to implement some functionality, some component and/or components of the device 100, such as the at least one processor 101 and/or the memory 102, may be configured to implement this functionality. Furthermore, when the at least one processor 101 is configured to implement some functionality, this functionality may be implemented using program code 103 comprised, for example, in the memory 102. For example, if the device 100 is configured to perform an operation, the at least one memory 102 and the computer program code 103 can be configured, with the at least one processor 101, to cause the bidding optimizer 200 to perform that operation.

Fig. 2 is an illustration of an example embodiment of the subject matter described herein illustrating a bidding optimizer 200 configured to operate as an intermediate between a renewable energy production plant system 299 and an electricity exchange 208. In the example configuration a renewable energy generator 202, for example a photovoltaic array or a wind turbine cluster, is configured with an energy storage 204 to provide energy for a power grid 207, where the power flow of the generator to either the grid tie inverter 205 (214) or energy storage 204 (213) is controlled by a respective renewable energy controller 201 and the power of the energy storage 204 is controlled by a respective energy storage manager 203. The bidding optimizer gathers data along its operation interval T to optimize a bid 217 for the electricity exchange 208. After the bid 217, the received input data 218 from the electricity exchange, which contains information such as demand and rate, is used to optimize the next and subsequent operation intervals.

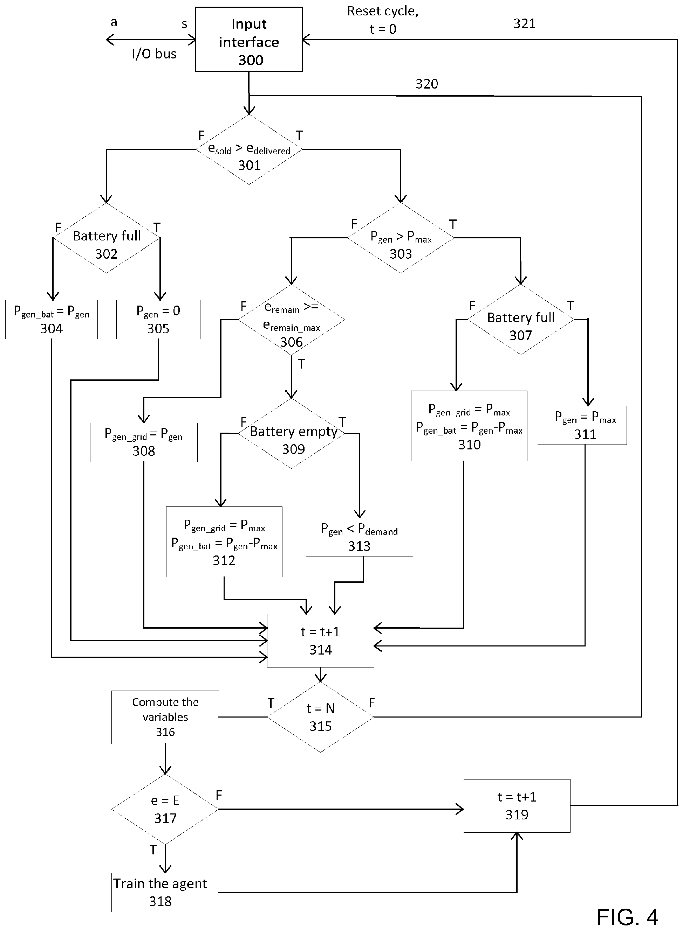

Fig. 3. shows a block diagram of an example embodiment configured as an intermediate between a renewable energy production plant system 299 and an electricity exchange 208. The goal of the bidding optimizer 200 is to operate an electricity energy storage 204 with control messages 212 through an energy storage manager 203 and to compensate for electricity power generation forecasts used at an electricity power bidding time, to control renewable electricity power generation 202 via control messages 211 through a renewable energy controller (REC) 201 so that that a maximum power flow 216 limits at a grid tie inverter 205 and grid coupler 206 are not exceeded. Additionally, the bidding optimizer 200 should control the energy storage 204 to shift providing of the generated renewable electricity power to intervals with a higher demand and to optimize the reward, which includes avoiding an unnecessary cost penalty and energy storage aging. The renewable energy plant 299 generally has power flows from the generator to the grid tie inverter 214, from the energy storage to the grid tie inverter 215, and from the generator to the energy storage 213. These power flows are typically not optimized; therefore one of the goals of the bidding optimizer 200 is to optimize these power flows. All of the previously mentioned functions and goals of the bidding optimizer 200 are achieved with a reinforcement learning agent (RLA) algorithm, by configuring the bidding optimizer 200 to reinforce the learning cycle of the RLA by using external data 218 from the electricity exchange 208, such as market rate and demand, and internal data using local variables explained in more detail in relation to Fig. 4. Finally, the RLA algorithm is configured to produce an optimized bid for the electricity exchange 208, depending on external data and internal data of operation during the operation interval *T.*

The operation interval T, during which control actions by the REC 201 and the ESM 203 may be taken, is divided to N timesteps. A generalized Eq. 1 describes the power 216 delivered to the energy grid 207 through the grid coupler 206 at a constant rate $P_{grid}$ as follows:

$$P_{grid} = \frac{e_{exchange}}{T} \quad (1)$$

$$P_{grid} = P_{bat\ grid} + P_{gen\ grid}, \quad (2)$$

where $e_{exchange}$ is the amount of electricity to be delivered for the exchange 208 during the operation interval *T*, $P_{rat\_grid}$ is the power that is directed from the energy storage 204 to the grid 207 and $P_{gen\_grid}$ is the power directed from the generator 202 to the grid 207.

The momentary power generation by the generation unit 202 is either directed to the grid 207 ($P_{gen\_grid}$) or the energy storage 204 ($P_{gen\_bat}$) or both:

$$P_{gen} = P_{gen\_grid} + P_{gen\_bat} \quad (3)$$

and the energy delivered so far during the operation interval T at time t is:

$$e_{delivered} = \sum_{i=0}^{t} P_{grid} * \frac{T}{N} \quad (4)$$

The energy that remains to be delivered during the operation interval is:

$$e_{remain} = e_{exchange} - e_{delivered} \quad (5)$$

The grid coupler 206 has a maximum power flow $P_{max}$, which is specified in the contract with the utility. Exceeding this maximum power, even for a short time, can involve a large penalty and thus must be avoided. At this maximum power, the energy that could be delivered to the energy grid during the remainder of the operation interval is:

$$e_{remain\_max} = \sum_{i=t}^{T-1} P_{max} * \frac{T}{N} \quad (6)$$

A reinforcement learning agent (RLA) is trained to form the bids within the bidding optimizer 200. An example embodiment of a method for this purpose is disclosed in Fig. 4. The input to the agent is a state data structure s. s includes the generation forecast and the exchange forecast for the upcoming operation interval(s) $T_m$. s also includes the State of Charge (SoC) of the energy storage 204 at the time of bidding. The output of the bidding optimizer agent 200 is an action a 217, which specifies the amount of available electricity to be bid $e_{bid}$ and the rate $rate_{bid}$ for the electricity exchange 208. After taking the action a, the bidding optimizer 200 is configured to receive 218 the amount of electricity to be delivered $e_{exchange}$ and the accepted exchange rate $rate_{accept}$ 218 for the next operation interval T. Based on $e_{exchange}$, the bidding optimizer 200 is configured to form the control signals 211 and 212 that specify the setpoints of the power flows in Fig. 2. The embodied logic for determining these setpoints is disclosed in Fig. 4. The inner loop in Fig. 4 runs for the duration of the operation interval T, after which it is time to compute a reward r, which specifies how good the action a was with respect to the multi-objective optimization targets stated under the purpose of this embodiment.

The independent variables, expressed as arrays of N elements, form the required reward function *r* as such:

$$r = revenue() + c_1 * penalty() + c_2 * age(), \quad (7)$$

where $c_1$ and $c_2$ are adjustable negative weights to adjust the importance of each target in the multi-objective optimization and where functions *revenue(), penalty()* and *age()* are dependent on the variables as follows:

$$revenue() = e_{exchange} * rate_{accept}, \quad (8)$$

$$penalty() = penalty(e_{sold}, e_{delivered}), \quad (9)$$

$$age() = age(SoC[N], P_{grid\ bat}[N], P_{gen\ bat}[N]) \quad (10)$$

The formula for the function *revenue()* is the multiplication of the amount of electricity to be delivered with the accepted rate by the exchange. The *penalty()* -function depends on the exchange rules of the specific electrical power exchange 208 and the *age()* - function is the aging penalty of the energy storage 204, which is an approximation of equivalent full cycles of, for example, a battery aging during the operation interval, multiplied by the penalty of one cycle for the energy storage 204. For batteries, the details of this formula are dependent on the specific chemistry of the energy storage. For a pumped waterpower plant, the details may be dependent on the mechanical wear of the components.

Before the bidding optimizer 200 may be able to bid successfully it may require several iterations; therefore it can be advantageous to utilize a market simulator, developed with historical market data, to perform the training with a simulator than within the actual physical environment. A properly trained reinforcement learning agent will be able to generalize to perform well even if the simulation is not a high-fidelity model of the physical environment. The bidding optimizer 200 can continue to learn as it executes the training method during the physical operation interval.

The independent variables a, *r*, s are stored in a general memory 103 and are used to optimize the training method described in Fig. 4. The input interface 300 communicates through the I/O bus that sends the action a and receives the state variable s. One full operation interval T lasts for t = N cycles, so the inner feedback loop 320 runs for the full cycle until the interface resets with the outer feedback loop 321. Based on the received $e_{exchange}$, the training methods comprise several Boolean logic checks (true or false), depending on the required and generated power, state of charge (SoC) and remaining electricity to be delivered $e_{remain}$.

For the Boolean checks in Fig. 4, T denotes a true clause and, respectively, F denotes a false clause. The first Boolean check 301 is to check if the complete system has delivered the required electricity, leading to either Boolean check 302, where SoC is polled, or Boolean check 303, where the available power $P_{gen}$ from the generator 202 and the energy storage 204 is polled. If during the operation interval T the demanded electricity has already been delivered, the check 302 checks the SoC and either curtails the generation to zero (no charging of the energy storage 204) or directs the generation of the generator 202 to the energy storage 204 (curtail power to grid $P_{gen}$ to zero). Respectively, a true clause from 301 leads to a logic check of 303 that polls the power generation state of the generator 202. Should the generator 202 have a momentary power generation higher than the maximum grid coupler 206 requirements, the SoC is polled with a Boolean check 307 as to whether excess power should either be directed towards the battery 310 (false of 307) or tell the renewable energy controller 201 to curtail the generator power to the required maximum limit 311 (true of 307).

In case the momentary generation of the generator 202 fails to reach the maximum power requirements, a false statement from 303 polls the state of the remaining electricity $e_{remain}$ with the Boolean check 306. Should $e_{remain}$ be lower than the maximum electricity that can be delivered $e_{remain\_max}$ (false of 306), the power towards the grid $P_{gen\_grid}$ is directed from the generator 202 to save the energy storage. In case of a true clause from 306, the SoC is again polled with the check 309, and should the energy storage 204 be empty at this current time t, the system is unable to meet the demanded power $P_{demand}$ (313). However, should the energy storage have energy left, the grid generation $P_{gen\_grid}$ is expanded to the maximum power with the generator and the excess available power is directed to charge the energy storage 204 (312).

As all of the previously mentioned logic flow has been completed, the timestep is incremented to check if the full operation interval has been completed (Boolean check 315). Should the cycle still have remaining steps, the inner feedback loop 320 is executed to improve the training for the cycle (true from 315); otherwise (false from 315) the variables s, a and r are calculated and stored in the buffer. The final Boolean check 317 verifies if the agent should be trained with the new variables in case of the condition $e_{exchange} = e_{delivered}$ is fulfilled, said condition signifying the agent was successful in its task. The outer feedback loop resets the operation cycle to t=0.

A device 100 may comprise means for performing any aspect of the method(s) described herein. According to an example embodiment, the means comprises at least one processor 101, and memory 102 comprising program code 103, the at least one processor 101 and program code 103 configured, when executed by the at least one processor 101, to cause performance of any aspect of the method.

The functionality described herein can be performed, at least in part, by one or more computer program product 103 components such as software components. According to an example embodiment, the device 100 comprises a processor 101 configured by the program code when executed to execute the example embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and Graphics Processing Units (GPUs).

Any range or device value given herein may be extended or altered without losing the effect sought. Also any example embodiment may be combined with another example embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one example embodiment or may relate to several example embodiments. The example embodiments are not limited to those that solve any or all of the stated problems or those that have any or all of the stated benefits and advantages. It will further be understood that reference to 'an' item may refer to one or more of those items.

The operations of the methods described herein may be carried out in any suitable order, or simultaneously where appropriate. Additionally, individual blocks may be deleted from any of the methods without departing from the spirit and scope of the subject matter described herein. Aspects of any of the example embodiments described above may be combined with aspects of any of the other example embodiments described to form further example embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments.

**Claims**

1. A device (100) for an electricity power bid, comprising:

   at least one processor (101); and
   at least one memory (102) including programmable logic, where the at least one memory and the programmable logic are configured, with the at least one processor, to cause the device (100) to operate as a bidding optimizer (200) that is configured to:

   control an electricity energy storage (204) to compensate for electricity power generation forecasts utilized during electricity power bidding
   control renewable electricity power generation (202) to ensure that that a power flow at a grid coupling (206) remains below a predetermined maximum limit;
   utilize the electricity energy storage to shift delivery of the generated renewable electricity power to time intervals **characterized by** heightened demand;
   optimize a reward function with an aim of minimizing unwarranted penalties and diminishing an effect of energy storage aging; and
   reinforce a learning cycle of a reinforcement learning agent (103) algorithm employed to optimize the operation of the bidding optimizer in accordance with the established configuration;
   wherein the device further comprises an interface (104) comprising:

   i) a data input that is configured to receive any data related to training the reinforcement learning agent such as weather forecast, electricity exchange forecast and/or State of Charge (SoC) of the electricity energy storage (204) associated with a system (299);
   ii) a data output that is configured to output an action for the electricity exchange, wherein the action includes the exchange data for an upcoming operation interval T of the system, where the operation interval $T$ is divided into N integer timesteps and the exchange data comprises the amount of available electricity to be bid at a rate provided by the reinforcement learning agent;
   iii) output messages to control a renewable energy controller (201) and an energy storage manager (203);

   and wherein the memory (102) is further configured for storing required variables used by the reinforcement learning agent (103) algorithm; and
   wherein the device that is further configured for a renewable energy site comprising at least one generator (202) and the electricity energy storage (204), where the at least one generator (202) comprises the renewable energy controller (201) and the electricity energy storage (204) comprises the energy storage manager (203), where the renewable energy controller (201) and the energy storage manager (203) are configured to receive control messages (211, 212) from the bidding optimizer (200).

2. The device (100) according to claim 1, wherein the device is configured to execute a revenue optimization function as follows:

$$r = revenue\big(e_{exchange}, rate_{accept}\big) + \\ c_1 * penalty\big(e_{exchange}, e_{delivered}\big) + \\ c_2 * age(),$$

   where $r$ is a reward for the operation interval $T$, the revenue() -function is a multiplication of an amount of electricity to be delivered $e_{exchange}$ with an accepted rate $rate_{accept}$ by an exchange;
   the penalty() -function is the penalty associated with rules of the electrical power exchange taking $e_{exchange}$ and $e_{delivered}$ as parameters, where $e_{delivered}$ is the amount of electricity delivered to the grid during a full cycle;
   the age() -function is the aging of the energy storage (204), which is an approximation of equivalent full cycles of storage aging during the operation interval and is dependent on the used energy storage; and
   where $c_1$ and $c_2$ are adjustable negative weights to adjust the importance of each target in the multi-objective optimization.

3. The device (100) according to claim 2, wherein the bidding optimizer is further configured to maximize a value of the reward r function by maximizing the rev*enue()* -function and minimizing the *penalty* -function and the age -function.

4. The device (100) according to any preceding claim, wherein the bidding optimizer is further configured to use a battery storage as the electricity energy storage to manage errors in the electricity power generation forecasts used at the electricity power bidding time.

5. The device (100) according to any preceding claim, wherein the bidding optimizer is further configured to ensure that the maximum power flow limits at the grid coupling are never exceeded, despite fluctuations in the renewable electricity power generation.

6. The device (100) according to any preceding claim, wherein the bidding optimizer is further configured to shift the providing of the generated renewable electricity power based on only uncertain demand forecasts available at the time of placing the bid.

7. The device (100) according to any preceding claim, wherein the bidding optimizer is further configured to avoid the energy storage discharging and charging operations if a benefit of the operations does not exceed the energy storage aging.

8. The device (100) according to any preceding claim, wherein the bidding optimizer is further configured to control both the electricity energy storage and renewable energy generator to meet an accepted demand of electricity from the electricity exchange and to avoid a penalty of exceeded delivery of electricity.

9. A method for an electricity power bid, performed by a computing device, the method comprising:

controlling an electricity energy storage (204) to compensate for electricity power generation forecasts utilized during electricity power bidding;
controlling renewable electricity power generation (202) to ensure that that a power flow at a grid coupling (206) remains below a predetermined maximum limit;
utilizing the electricity energy storage to shift delivery of the generated renewable electricity power to time intervals **characterized by** a higher demand;
optimizing a reward function with an aim of minimizing unwarranted penalties and diminishing an effect of energy storage aging; and
reinforcing a learning cycle of a reinforcement learning agent (103) algorithm employed to optimize the operation efficiency of a bidding optimizer in accordance with the established configuration
wherein the device further comprises an interface (104), the method further comprising:

iv) receiving, by a data input that, any data related to training the reinforcement learning agent such as weather forecast, electricity exchange forecast and/or State of Charge (SoC) of the electricity energy storage (204) associated with a system (299);
v) outputting, by a data output, an action for the electricity exchange, wherein the action includes the exchange data for an upcoming operation interval T of the system, where the operation interval T is divided into N integer timesteps and the exchange data comprises the amount of available electricity to be bid at a rate provided by the reinforcement learning agent;
vi) controlling, by output messages, a renewable energy controller (201) and an energy storage manager (203);

and wherein the memory (102) is further configured for storing required variables used by the reinforcement learning agent (103) algorithm; and
wherein the device that is further configured for a renewable energy site comprising at least one generator (202) and the electricity energy storage (204), where the at least one generator (202) comprises the renewable energy controller (201) and the electricity energy storage (204) comprises the energy storage manager (203), where the renewable energy controller (201) and the energy storage manager (203) are configured to receive control messages (211, 212) from the bidding optimizer (200).

10. A computer program product comprising program code configured to perform the method according to claim 9 when the computer program product is executed on a computer.

**Patentansprüche**

1. Gerät (100) für ein Stromangebot, umfassend:

   mindestens einen Prozessor (101); und
   mindestens einen Speicher (102) mit programmierbarer Logik, wobei der mindestens eine Speicher und die programmierbare Logik dazu konfiguriert sind, mit dem mindestens einen Prozessor das Gerät (100) dazu zu veranlassen, als ein Angebotsoptimierer (200) zu arbeiten, der zu Folgendem konfiguriert ist:

   Steuern eines Elektroenergiepeichers (204) zum Ausgleichen von Stromerzeugungsvorhersagen, die während des Stromangebots verwendet werden,
   Steuern von erneuerbarer Stromerzeugung (202), um sicherzustellen, dass ein Stromfluss an einer Netzkopplung (206) unter einer vorgegebenen Höchstgrenze bleibt;
   Verwenden des Elektroenergiepeichers, um eine Lieferung des erzeugten erneuerbaren Stroms auf Zeitintervalle zu verschieben, die durch erhöhte Nachfrage gekennzeichnet sind;
   Optimieren einer Belohnungsfunktion mit dem Ziel, ungerechtfertigte Strafen zu minimieren und einen Effekt der Energiespeicheralterung zu verringern; und
   Verstärken eines Lernzyklus eines Verstärkungslernagenten- (103) Algorithmus, der verwendet wird, um den Betrieb des Angebotsoptimierers gemäß der festgelegten Konfiguration zu optimieren;
   wobei das Gerät ferner eine Schnittstelle (104) umfasst, umfassend:

   i) einen Dateneingang, der dazu konfiguriert ist, alle Daten zu empfangen, die sich auf das Trainieren des Verstärkungslernagenten beziehen, wie etwa Wettervorhersage, Strombörsenvorhersage und/oder Ladezustand (SoC) des Elektroenergiepeichers (204), der einem System (299) zugeordnet ist;
   ii) einen Datenausgang, der dazu konfiguriert ist, eine Aktion für die Strombörse auszugeben, wobei die Aktion die Börsendaten für ein bevorstehendes Betriebsintervall $T$ des Systems beinhaltet, wobei das Betriebsintervall $T$ in $N$ ganzzahlige Zeitschritte unterteilt ist und die Börsendaten die Menge an verfügbarem Strom umfassen, der mit einer Rate angeboten werden soll, die von dem Verstärkungslernagenten bereitgestellt wird;
   iii) Ausgeben von Nachrichten zum Steuern einer Erneuerbare-Energie-Steuerung (201) und eines Energiespeichermanagers (203);

   und wobei der Speicher (102) ferner zum Speichern erforderlicher Variablen konfiguriert ist, die von dem Verstärkungslernagenten- (103) Algorithmus verwendet werden; und
   wobei das Gerät, das ferner für einen Erneuerbare-Energie-Standort konfiguriert ist, mindestens einen Erzeuger (202) und den Elektroenergiespeicher (204) umfasst, wobei der mindestens eine Erzeuger (202) die Erneuerbare-Energie-Steuerung (201) umfasst und der Elektroenergiespeicher (204) den Energiespeichermanager (203) umfasst, wobei die Erneuerbare-Energie-Steuerung (201) und der Energiespeichermanager (203) dazu konfiguriert sind, Steuernachrichten (211, 212) von dem Angebotsoptimierer (200) zu empfangen.

2. Gerät (100) nach Anspruch 1, wobei das Gerät dazu konfiguriert ist, eine Umsatzoptimierungsfunktion wie folgt auszuführen:

$$r = Umsatz(e_{exchange}, rate_{accept}) +$$
$$c_1 * Strafe(e_{exchange}, e_{delivered}) +$$
$$c_2 * Alter(),$$

   wobei r eine Belohnung für das Betriebsintervall T ist, die *Umsatz()-Funktion* eine Multiplikation einer zu liefernden Menge an Strom $e_{exchange}$ ist mit einer akzeptierten Rate $rate_{accept}$ durch eine Börse;
   die *Strafe()*-Funktion die Strafe ist, die mit Regeln der Strombörse assoziiert ist, die $e_{exchange}$ und $e_{delivered}$ als Parameter annimmt, wobei $e_{delivered}$ die Menge an Strom ist, die während eines vollen Zyklus an das Netz geliefert wird;
   die *Alter()*-Funktion die Alterung des Energiespeichers (204) ist, die eine Näherung von äquivalenten vollen Zyklen der Speicheralterung während des Betriebsintervalls ist und von dem verwendeten Energiespeicher abhängig ist; und

wobei $c_1$ und $c_2$ einstellbare negative Gewichte sind, um die Wichtigkeit jedes Ziels in der Multizieloptimierung einzustellen.

3. Gerät (100) nach Anspruch 2, wobei der Angebotsoptimierer ferner dazu konfiguriert ist, einen Wert der Belohnungsfunktion r durch Maximieren der *Umsatz()*-Funktion und Minimieren der *Strafe*-Funktion und der *Alter*-Funktion zu maximieren.

4. Gerät (100) nach einem der vorangehenden Ansprüche, wobei der Angebotsoptimierer ferner dazu konfiguriert ist, einen Batteriespeicher als den Elektroenergiespeicher zu verwenden, um Fehler in den Stromerzeugungsvorhersagen zu verwalten, die zu der Stromangebotszeit verwendet wurden.

5. Gerät (100) nach einem der vorangehenden Ansprüche, wobei der Angebotsoptimierer ferner dazu konfiguriert ist, sicherzustellen, dass die Höchststromflussgrenzen an der Netzkopplung trotz Schwankungen in der erneuerbaren Stromerzeugung nie überschritten werden.

6. Gerät (100) nach einem der vorangehenden Ansprüche, wobei der Angebotsoptimierer ferner dazu konfiguriert ist, die Bereitstellung des erzeugten erneuerbaren Stroms basierend auf nur unsicheren Nachfragevorhersagen, die zu der Zeit der Abgabe des Angebots verfügbar sind, zu verschieben.

7. Gerät (100) nach einem der vorangehenden Ansprüche, wobei der Angebotsoptimierer ferner dazu konfiguriert ist, die Energiespeicher-Entlade- und Ladevorgänge zu vermeiden, wenn ein Nutzen der Vorgänge die Energiespeicheralterung nicht überschreitet.

8. Gerät (100) nach einem der vorangehenden Ansprüche, wobei der Angebotsoptimierer ferner dazu konfiguriert ist, sowohl den Elektroenergiespeicher als auch den Erneuerbare-Energie-Erzeuger zu steuern, um eine akzeptierte Nachfrage nach Strom von der Strombörse zu erfüllen und eine Strafe einer überschrittenen Lieferung von Strom zu vermeiden.

9. Verfahren für ein Stromangebot, das von einem Computergerät durchgeführt wird, wobei das Verfahren umfasst:

Steuern eines Elektroenergiepeichers (204) zum Ausgleichen von Stromerzeugungsvorhersagen, die während des Stromangebots verwendet werden;
Steuern von erneuerbarer Stromerzeugung (202), um sicherzustellen, dass ein Stromfluss an einer Netzkopplung (206) unter einer vorgegebenen Höchstgrenze bleibt;
Verwenden des Elektroenergiepeichers, um eine Lieferung des erzeugten erneuerbaren Stroms auf Zeitintervalle zu verschieben, die durch eine höhere Nachfrage gekennzeichnet sind;
Optimieren einer Belohnungsfunktion mit dem Ziel, ungerechtfertigte Strafen zu minimieren und einen Effekt der Energiespeicheralterung zu verringern; und
Verstärken eines Lernzyklus eines Verstärkungslernagenten- (103) Algorithmus, der verwendet wird, um die Betriebseffizienz eines Angebotsoptimierers gemäß der festgelegten Konfiguration zu optimieren,
wobei das Gerät ferner eine Schnittstelle (104) umfasst, wobei das Verfahren ferner umfasst:

iv) Empfangen, durch einen Dateneingang, aller Daten, die sich auf das Trainieren des Verstärkungslernagenten beziehen, wie etwa Wettervorhersage, Strombörsenvorhersage und/oder Ladezustand (Soc) des Elektroenergiepeichers (204), der einem System (299) zugeordnet ist;
v) Ausgeben, durch einen Datenausgang, einer Aktion für die Strombörse, wobei die Aktion die Börsendaten für ein bevorstehendes Betriebsintervall T des Systems beinhaltet, wobei das Betriebsintervall $T$ in $N$ ganzzahlige Zeitschritte unterteilt ist und die Börsendaten die Menge an verfügbarem Strom umfassen, der mit einer Rate angeboten werden soll, die von dem Verstärkungslernagenten bereitgestellt wird;
vi) Steuern, durch Ausgabenachrichten, einer Erneuerbare-Energie-Steuerung (201) und eines Energiespeichermanagers (203);

und wobei der Speicher (102) ferner zum Speichern erforderlicher Variablen konfiguriert ist, die von dem Verstärkungslernagenten- (103) Algorithmus verwendet werden; und
wobei das Gerät, das ferner für einen Erneuerbare-Energie-Standort konfiguriert ist, mindestens einen Erzeuger (202) und den Elektroenergiespeicher (204) umfasst, wobei der mindestens eine Erzeuger (202) die Erneuerbare-Energie-Steuerung (201) umfasst und der Elektroenergiespeicher (204) den Energiespeichermanager (203) umfasst, wobei die Erneuerbare-Energie-Steuerung (201) und der Energiespeichermanager (203) dazu konfiguriert sind, Steuernachrichten (211, 212) von dem Angebotsoptimierer (200) zu empfangen.

**10.** Computerprogrammprodukt, umfassend Programmcode, der dazu konfiguriert ist, das Verfahren nach Anspruch 9 durchzuführen, wenn das Computerprogrammprodukt auf einem Computer ausgeführt wird.

**Revendications**

**1.** Dispositif (100) pour une offre d'électricité, comprenant :

au moins un processeur (101) ; et
au moins une mémoire (102) incluant une logique programmable, où la au moins une mémoire et la logique programmable sont configurées, avec le au moins un processeur, pour amener le dispositif (100) à fonctionner en tant qu'optimiseur (200) d'offres qui est configuré pour :

commander un stockage d'énergie électrique (204) afin de compenser les prévisions de production d'électricité utilisées pendant l'offre d'électricité
commander la production d'électricité renouvelable (202) pour s'assurer qu'un flux d'énergie au niveau d'un couplage de réseau (206) reste sous une limite maximale prédéterminée ;
utiliser le stockage d'énergie électrique pour décaler la distribution de l'électricité renouvelable produite à des intervalles de temps **caractérisée par** une demande accrue ;
optimiser une fonction de rétribution avec un objectif de réduire à un minimum les pénalités non garanties et diminuer un effet de vieillissement de stockage d'énergie ; et
renforcer un cycle d'apprentissage d'un algorithme d'agent d'apprentissage de renforcement (103) employé pour optimiser le fonctionnement de l'optimiseur d'offres conformément à la configuration établie ;
dans lequel le dispositif comprend en outre une interface (104) comprenant :

i) une entrée de données qui est configurée pour recevoir toute donnée liée à la formation de l'agent d'apprentissage de renforcement tel qu'une prévision météo, une prévision d'échange d'électricité et/ou un état de charge (SoC) du stockage d'énergie électrique (204) associés à un système (299) ;
ii) une sortie de données qui est configurée pour délivrer en sortie une action pour l'échange d'électricité, dans lequel l'action inclut les données d'échange pour un prochain intervalle d'opération $T$ du système, où l'intervalle d'opération $T$ est divisée en N pas de temps entiers et les données d'échange comprennent la quantité d'électricité disponible à offrir à un taux fourni par l'agent d'apprentissage de renforcement ;
iii) des messages de sortie pour commander un dispositif de commande (201) d'énergie renouvelable et un gestionnaire (203) de stockage d'énergie ;

et dans lequel la mémoire (102) est en outre configurée pour stocker des variables requises utilisées par l'algorithme d'agent d'apprentissage de renforcement (103) ; et
dans lequel le dispositif est en outre configuré pour un site d'énergie renouvelable comprenant au moins un générateur (202) et le stockage d'énergie électrique (204), où le au moins un générateur (202) comprend le dispositif de commande (201) d'énergie renouvelable et le stockage d'énergie électrique (204) comprend le gestionnaire de stockage d'énergie (203), où le dispositif de commande (201) d'énergie renouvelable et le gestionnaire de stockage d'énergie (203) sont configurés pour recevoir des messages de commande (211, 212) provenant de l'optimiseur (200) d'offres.

**2.** Dispositif (100) selon la revendication 1, dans lequel le dispositif est configuré pour mettre en œuvre une fonction d'optimisation de revenu comme suit :

$$r = revenu(e_{exchange}, rate_{accept}) +$$
$$C_1 * pénalité(e_{exchange}, e_{;\ delivered}) +$$
$$c_2 * âge(),$$

où r est une rétribution pour l'intervalle d'opération $T$, la fonction $revenu()$ est une multiplication d'une quantité d'électricité à distribuer $e_{exchange}$ avec un taux accepté $rate_{accept}$ par un échange ;
la fonction $pénalité()$ est la pénalité associée à des règles de l'échange d'électricité prenant $e_{exchange}$ et $e_{delivered}$

comme paramètres, **où** $e_{delivered}$ est la quantité d'électricité distribuée au réseau pendant un cycle complet ;
la fonction *âge()* est le vieillissement du stockage d'énergie (204), qui est une approximation de cycles de stockage complets équivalents vieillissant pendant l'intervalle d'opération et dépend du stockage d'énergie utilisé ; et
où $c_1$ et $c_2$ sont des poids négatifs réglables pour régler l'importance de chaque cible dans l'optimisation à objectifs multiples.

3. Dispositif (100) selon la revendication 2, dans lequel l'optimiseur d'offres est en outre configuré pour maximiser une valeur de la fonction rétribution r en maximisant la fonction *revenu()* et en minimisant la fonction *pénalité* et la fonction âge.

4. Dispositif (100) selon une quelconque revendication précédente, dans lequel l'optimiseur d'offres est en outre configuré pour utiliser un stockage sur batterie comme stockage d'énergie électrique afin de gérer les erreurs dans les prévisions de production d'électricité utilisées au moment de l'offre d'électricité.

5. Dispositif (100) selon une quelconque revendication précédente, dans lequel l'optimiseur d'offres est en outre configuré pour s'assurer que les limites de flux d'énergie maximales au niveau du couplage de réseau ne sont jamais dépassées, malgré les fluctuations dans la production d'électricité renouvelable.

6. Dispositif (100) selon une quelconque revendication précédente, dans lequel l'optimiseur d'offres est en outre configuré pour décaler la fourniture de l'électricité renouvelable produite sur la base uniquement de prévisions de demandes incertaines disponibles au moment de la mise en place de l'offre.

7. Dispositif (100) selon une quelconque revendication précédente, dans lequel l'optimiseur d'offres est en outre configuré pour éviter les opérations de décharge et de charge de stockage d'énergie si un bénéfice des opérations ne dépasse pas le vieillissement de stockage d'énergie.

8. Dispositif (100) selon une quelconque revendication précédente, dans lequel l'optimisateur d'offres est en outre configuré pour commander à la fois le stockage d'énergie électrique et le générateur d'énergie renouvelable pour répondre à une demande d'électricité acceptée depuis l'échange d'électricité et pour éviter une pénalité de distribution d'électricité dépassée.

9. Procédé pour une offre d'électricité, mis en œuvre par un dispositif informatique, le procédé comprenant :

la commande d'un stockage d'énergie électrique (204) afin de compenser les prévisions de production d'électricité utilisées pendant l'offre d'électricité ;
la commande de production d'électricité renouvelable (202) pour s'assurer qu'un flux d'énergie au niveau d'un couplage de réseau (206) reste sous une limite maximale prédéterminée ;
l'utilisation du stockage d'énergie électrique pour décaler la distribution de l'électricité renouvelable produite à des intervalles de temps **caractérisée par** une demande plus élevée ;
l'optimisation d'une fonction de rétribution avec un objectif de réduire à un minimum les pénalités non garanties et diminuer un effet de vieillissement de stockage d'énergie ; et
le renforcement d'un cycle d'apprentissage d'un algorithme d'agent d'apprentissage de renforcement (103) employé pour optimiser l'efficacité de fonctionnement de l'optimiseur d'offres conformément à la configuration établie
dans lequel le dispositif comprend en outre une interface (104), le procédé comprenant en outre :

iv) la réception, par une entrée de données, de toute donnée liée à la formation de l'agent d'apprentissage de renforcement tel qu'une prévision météo, une prévision d'échange d'électricité et/ou un état de charge (SoC) du stockage d'énergie électrique (204) associés à un système (299) ;
v) la sortie, par une sortie de données, d'une action pour l'échange d'électricité, dans lequel l'action inclut les données d'échange pour un prochain intervalle d'opération $T$ du système, où l'intervalle d'opération $T$ est divisée en N pas de temps entiers et les données d'échange comprennent la quantité d'électricité disponible à offrir à un taux fourni par l'agent d'apprentissage de renforcement ;
vi) la commande, par des messages de sortie, d'un dispositif de commande (201) d'énergie renouvelable et d'un gestionnaire (203) de stockage d'énergie ;

et dans lequel la mémoire (102) est en outre configurée pour stocker des variables requises utilisées par l'algorithme d'agent d'apprentissage de renforcement (103) ; et

dans lequel le dispositif est en outre configuré pour un site d'énergie renouvelable comprenant au moins un générateur (202) et le stockage d'énergie électrique (204), où le au moins un générateur (202) comprend le dispositif de commande (201) d'énergie renouvelable et le stockage d'énergie électrique (204) comprend le gestionnaire de stockage d'énergie (203), où le dispositif de commande (201) d'énergie renouvelable et le gestionnaire de stockage d'énergie (203) sont configurés pour recevoir des messages de commande (211, 212) provenant de l'optimiseur (200) d'offres.

10. Produit de programme informatique comprenant un code de programme configuré pour mettre en œuvre le procédé selon la revendication 9 quand le produit de programme informatique est mis en œuvre sur un ordinateur.

FIG. 1

System 299

200

201

202

211

207

214

205

206

213

212

203

216

215

217   218

204

208

FIG. 2

FIG. 3

Reset cycle,
t = 0

321

a ← s → **Input interface 300** ←

I/O bus

320

$e_{sold} > e_{delivered}$
301
F / T

**Battery full 302**
F / T

$P_{gen} > P_{max}$
303
F / T

$P_{gen\_bat} = P_{gen}$
304

$P_{gen} = 0$
305

$e_{remain} >= e_{remain\_max}$
306
F / T

**Battery full 307**
F / T

$P_{gen\_grid} = P_{gen}$
308

**Battery empty 309**
F / T

$P_{gen\_grid} = P_{max}$
$P_{gen\_bat} = P_{gen} - P_{max}$
310

$P_{gen} = P_{max}$
311

$P_{gen\_grid} = P_{max}$
$P_{gen\_bat} = P_{gen} - P_{max}$
312

$P_{gen} < P_{demand}$
313

t = t+1
314

**Compute the variables 316**

t = N
315
T / F

e = E
317
F / T

t = t+1
319

**Train the agent 318**

FIG. 4

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022230243 A1